# EUROPÄISCHE PATENTSCHRIFT

(11) **EP 2 608 990 B1**
(45) Veröffentlichungstag und Bekanntmachung des Hinweises auf die Patenterteilung: **18.02.2015**
(21) Anmeldenummer: 11763863.5
(22) Anmeldetag: 29.08.2011
(51) Int. Cl.: B60R 21/20

(54) **BEFESTIGUNG EINES HALTETEILS EINES GASSACKMODULS MIT EINEM VERBINDUNGSTEIL EINER FAHRZEUGSTRUKTUR**
FASTENING OF FASTENING PART OF AN AIRBAG MODULE WITH A CONNECTING PART OF A VEHICLE BODY STRUCTURE
FIXATION D'UNE PIÈCE DE FIXATION D'UN COUSSION GONFLABLE AVEC UNE PIÈCE DE CONNECTION DE LA STRUCTURE D'UN VÉHICULE

(30) Priorität: 27.08.2010 DE 102010039899
(43) Veröffentlichungstag der Anmeldung: 03.07.2013
(73) Patentinhaber: Takata AG, 63743 Aschaffenburg (DE)
(72) Erfinder: SIEGEL, Wolfgang, 89567 Sontheim/Brenz (DE); ZELINKA, Arno, 89233 Neu-Ulm (DE)
(74) Vertreter: Müller, Wolfram Hubertus
(86) Internationale Anmeldenummer: PCT/EP2011/064834
(87) Internationale Veröffentlichungsnummer: WO 2012/025635

(56) Entgegenhaltungen:
- EP-A1- 1 464 550
- EP-A1- 2 112 031
- JP-A- 2005 096 698
- US-A1- 2005 046 154
- US-B1- 6 231 068

## Beschreibung

Die Erfindung betrifft eine Vorrichtung zur Befestigung eines Halteteils eines Gassackmoduls eines Fahrzeuginsassen-Rückhaltesystems mit einem Verbindungsteil einer Fahrzeugstruktur.

Rückhaltesysteme für Personen in Kraftfahrzeugen umfassen unter anderem Seitenairbags. Eine Platzierung der Seitenairbags erfolgt üblicherweise an unterschiedlichen Stellen entlang der Fahrzeuglängsseite. Der Einbau kann beispielsweise durch Integration in einen Fahrzeugsitz, insbesondere in die Lehne eines Fahrzeugsitzes oder durch Integration in eine Fahrzeugtür erfolgen.

Aus der DE 100 65 795 A1 ist eine Befestigung eines Airbags an einer Lehne eines Fahrzeugsitzes bekannt. Dort wird eine Haltevorrichtung für einen Airbag mittels eines Hakens an einem Seitenholm der Lehne angebracht und verschraubt.

Diese bekannte Art der Befestigung einer Haltevorrichtung ist mit Nachteilen verbunden. Insbesondere erfordert der Einbau der Haltevorrichtung durch die notwendige Schraubbefestigung eine hohe Taktzeit. Weiterhin entstehen zusätzliche Kosten durch die Verwendung einer Schweißmutter oder Einnietmutter bei Befestigung der Haltvorrichtung in der Lehne.

Aus der US 2005/0046154 A1 und an der JP 2005 096698 A ist eine gattungsgemäße Vorrichtung mit einem Halteclip mit ersten Verbindungselementen in Form zweier Einführhaken bekannt, die nach Verbindung des Halteclips mit einem Befestigungsträger durch Öffnungen des Befestigungsträgers ragen. Dabei umfasst der Befestigungsträger ein zweites Verbindungselement in Form eines abgewinkelten Abschnitts, das eine Öffnung des Halteclips durchgreift.

Der Erfindung liegt die Aufgabe zu Grunde, eine Vorrichtung zu schaffen, mit der in einfacher, kosten- und zeitgünstiger Weise ein Gassackmodul eines Fahrzeuginsassen-Rückhaltesystems innerhalb eines Fahrzeuges, insbesondere innerhalb einer Seitenlehne eines Fahrzeugsitzes, befestigt werden kann.

Diese Aufgabe wird durch eine Vorrichtung mit den Merkmalen des Anspruchs 1 gelöst. Ausgestaltungen der Erfindung sind in den Unteransprüchen angegeben.

Danach ist bei einer Vorrichtung zum Befestigen eines Halteteils eines Gassackmoduls eines Fahrzeuginsassen-Rückhaltesystems mit einem Verbindungsteil einer Fahrzeugstruktur an dem Halteteil mindestens ein erstes Verbindungselement, das von einem Rand einer Öffnung in dem Halteteil absteht, vorgesehen. Zusätzlich ist am Verbindungsteil mindestens ein zweites Verbindungselement, das von einem Rand einer Öffnung in dem Verbindungsteil absteht, vorgesehen.

Das erste Verbindungselement dient dabei dem Verbinden des Halteteils mit dem Verbindungsteil der Fahrzeugstruktur und das zweite Verbindungselement dient dem Verbinden des Verbindungsteils mit dem Halteteil.

Das Halteteil wird mit dem Verbindungsteil der Fahrzeugstruktur derart verbunden, dass im verbundenen Zustand das erste Verbindungselement des Halteteils die Öffnung des Verbindungsteils durchgreift und das zweite Verbindungselement des Verbindungsteils die Öffnung des Halteteils durchgreift.

Dabei steht in einer Ausgestaltung das erste Verbindungselement von einem Rand der Öffnung des Halteteils in Richtung der Anbringung des Halteteils ab und erstreckt sich dabei räumlich vor dem Halteteil. Weiterhin steht das zweite Verbindungselement von einem Rand der Öffnung des Verbindungsteils entgegen der Richtung der Anbringung des Halteteils ab und erstreckt sich dabei räumlich hinter dem Verbindungsteil.

In einem Ausführungsbeispiel ist die erste Ausstellrichtung des freien Endes des ersten Verbindungselement des Halteteils annähernd entgegengesetzt zu der zweiten Ausstellrichtung des freien Endes des zweite Verbindungselement des Verbindungsteils ausgerichtet. Eine Montage erfolgt somit durch ein Einführen des ersten Verbindungselements des Halteteils in die die Öffnung des Verbindungsteils, wobei gleichzeitig das zweite Verbindungselement des Verbindungsteils die Öffnung des Halteteils durchgreift. Die Montage erfolgt demnach ohne aufwendiges Verschweißen oder Verschrauben in einem einzigen sehr einfachen Arbeitsschritt.

In einer Ausgestaltung liegt in einem verbundenen Zustand des Halteteils mit dem Verbindungsteil das erste Verbindungselement des Halteteils auf dem Verbindungsteil auf und das zweite Verbindungselement des Verbindungsteils auf dem Halteteil auf. Dadurch wird eine eindeutige Positionierung des Halteteils am Verbindungsteil erreicht und somit ein Verschieben oder Lösen des Halteteils vermieden. Weiterhin werden dadurch störende Klappergeräusche beim Betrieb unterbunden.

In einer weiteren Ausgestaltung weist das Halteteil ein Verrastungselement und das Verbindungsteil ein Verrastungsgegenstück auf. Im verrasteten Zustand wird somit ein unbeabsichtigtes lösen des Halteteils vom Verbindungsteil verhindert.

In einem weiteren Ausführungsbeispiel weist die Öffnung des Verbindungsteils einen ersten Abstand an dem Rand der Öffnung auf, der dem zweiten Verbindungselement gegenüberliegt, wobei dieser Abstand größer ist als eine erste Breite des ersten Verbindungselements. Es besteht die Möglichkeit, dass die Öffnung des Halteteils, zusätzlich oder stattdessen einen ersten Abstand an dem Rand der Öffnung aufweist, der dem ersten Verbindungselement anliegt, wobei dieser Abstand größer ist als eine erste Breite des zweiten Verbindungselements. Alternativ oder zusätzlich verjüngt sich das erste Verbindungselement des Halteteils entlang der ersten Ausstellrichtung. Weiterhin besteht die Möglichkeit, dass sich das zweite Verbindungselement des Verbindungsteils, zusätzlich oder stattdessen entlang der zweiten Ausstellrichtung verjüngt. Dadurch wird ein sehr einfaches Durchgreifen der jeweiligen Verbindungselemente erreicht, ohne dass dabei ein kraft- und formschlüssiges Verbinden beeinträchtigt wird und somit ein sicheres Positionieren des Halteteils am Verbindungsteil gewährleistet ist.

Das Halteteil kann - in sämtlichen Ausführungsbeispielen sämtlicher Aspekte der vorliegenden Erfindung - ein gesondertes Trägerelement, insbesondere aus Stahl oder Blech sein, an dem Komponenten des Gassackmoduls wie z.B. der Gasgenerator befestigt sind und das der Befestigung des Gassackmoduls an einer Sitzstruktur oder Fahrzeugstruktur dient. Das Halteteil kann jedoch auch durch eine andere Komponente eines Gassackmoduls wie beispielsweise ein Gassackgehäuse oder einen Gassackträger gebildet sein. An einem solchen sind die Elemente ausgebildet, die mit dem Verbindungsteil in Interaktion treten.

Die Erfindung betrifft in einer Ausgestaltung die Montage des Halteteils eines Gassackmoduls eines Fahrzeuginsassen-Rückhaltesystems mit einem Verbindungsteil der Fahrzeugstruktur, das Teil eines Sitzrahmens oder mit einem Sitzrahmen verbunden ist. Vorzugsweise stellt das an dem Verbindungsteil der Fahrzeugstruktur zu befestigende Gassackmodul des Halteteils ein Seitenairbagmodul dar.

In einer alternativen Ausführungsvariante findet die Montage der Vorrichtung an einer Fahrzeugtür, insbesondere an einer Verstrebung einer Fahrzeugtür statt.

Es liegt im Rahmen der Erfindung, dass nur Teile eines Airbagmoduls bzw. Seitenairbagmoduls an das Halteteil befestigt sind. Dadurch ergibt sich die Möglichkeit weitere Elemente des Moduls eines Fahrzeuginsassen-Rückhaltesystems, wie beispielsweise einen Gassackhaltering, einen Gasgenerator und/oder einen Diffusor in andere Sitzkomponenten wie beispielsweise den Seitenholm des Sitzes zu integrieren. Die Erfindung wird nachfolgend unter Bezugnahme auf die Figuren der Zeichnungen näher erläutert. Es zeigen:
- Fig. 1A: ein Ausführungsbeispiel eines Halteteils mit von einer Öffnung abstehenden ersten Verbindungselementen;
- Fig. 1B: ein Verbindungsteil des Ausführungsbeispiels mit von einer Öffnung abstehenden zweiten Verbindungselementen;
- Fig. 2: das Halteteil der Fig. 1A und das Verbindungsteil der Fig. 1B in verbundenem Zustand;
- Fig. 3: das Halteteil und das Verbindungsteil der Fig. 2 in einem verbundenen Zustand in einer rückwärtigen Ansicht im Bezug auf die Anbringungsrichtung der Haltervorrichtung;
- Fig. 4: das Halteteil und das Verbindungsteil der Fig. 2 in einem verbundenen Zustand in einer frontalen Ansicht im Bezug auf die Anbringungsrichtung der Haltervorrichtung;
- Fig. 5: das Halteteil und das Verbindungsteil der Fig. 2 in einem verbundenen Zustand in einer frontalen Ansicht im Bezug auf die Anbringungsrichtung der Haltervorrichtung mit Darstellung eines Verrastungselements und eines Verrastungsgegenstücks;

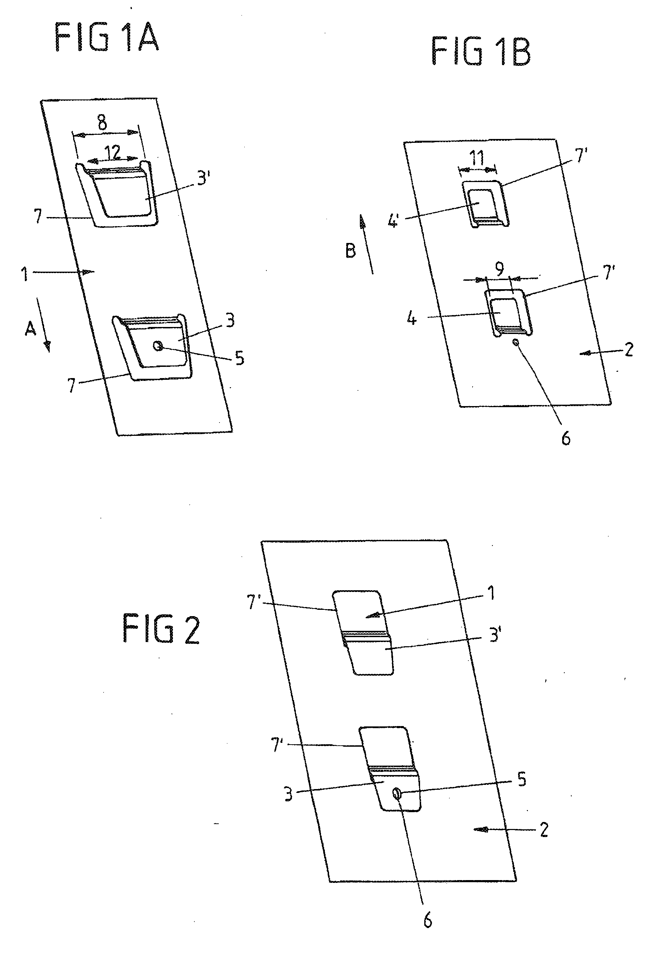

Die Fig. 1A zeigt ein Ausführungsbeispiel einer Vorrichtung zum Befestigen eines Gassackmoduls eines.Halteteils 1 eines Fahrzeuginsassen-Rückhaltesystems an einem in der Fig. 1B dargestellten Verbindungsteil 2 einer Fahrzeugstruktur, bei der es sich beispielsweise um ein Sitzblech handelt. Das Halteteil 1 umfasst zwei von jeweils einem Rand der Öffnung 7 abstehende erste Verbindungselementen 3 und 3' und ein Verrastungselement 5. Die beiden ersten Verbindungselementen 3 und 3' befinden sich räumlich vor dem Halteteil 1 (die Betrachtung erfolgt in der Richtung der Anbringung des Halteteils 1).

Die beiden ersten Verbindungselemente 3 und 3' dienen dem Verbinden des Halteteils 1 mit dem Verbindungsteil 2 der Fahrzeugstruktur. Der verbundene Zustand des Halteteils 1 und des Verbindungsteils 2 ist in der Fig. 2 dargestellt. Die beiden ersten Verbindungselemente 3 und 3' werden derart entlang einer ersten Ausstellrichtung A der beiden ersten Verbindungselemente 3 und 3' in die Öffnungen 7' des Verbindungsteils 2 der Fig. 1B eingeführt, dass sie die Öffnungen 7' des Verbindungsteils 2 durchgreifen.

Weiter ist ein Verrastungselement 5 vorgesehen, welches mit einem Verrastungsgegenstück 6 (in Fig. 1B dargestellt) eine Verrastung des Halteteils 1 mit dem Verbindungsteil 2 ermöglicht. Die Verrastung erfolgt in dieser bevorzugten Ausführungsform mittels einer kreisrunden Öffnung 5 an dem Halteteil 1 und einem entsprechenden Verrastungsgegenstück in Form einer halbkugelförmigen Erhebung 6 an dem Verbindungsteil 2, oder umgekehrt. Es können aber auch andere Verrastungsarten verwendet werden.

Das Verrastungselement 5 ist in eine der beiden ersten Verbindungselemente 3 integriert. Diese Anordnung ist allerdings nicht zwingend und das Verrastelement 5 kann an jeder beliebigen Stellen an dem Halteteil 1 angebracht sein. Auch eine Beschränkung auf nur ein Verrastelement 5 oder nur zwei erste Verbindungselemente 3, 3' ist nicht zwingen, sondern die Anzahl kann beliebig erweitert werden.

Die Öffnung 7 des Halteteils 1 weist einen ersten Abstand 8 auf (betrachtet wird hierbei die dem Rand der Öffnung, an dem sich das abstehende erste Verbindungselement 3 befindet, anliegende Seite), der größer ist als eine erste Breite 9 des zweiten Verbindungselements 4 (in Fig. 1B dargestellt).

Zusätzlich weist das erste Verbindungselement 3 des Halteteils 1 eine erste Breite 12 auf, die minimal kleiner ist als der erste Abstand 11 (in Fig. 1B dargestellt) der Öffnung des Verbindungsteils 2 (betrachtet wird hierbei die dem Rand der Öffnung, an dem sich das abstehende zweite Verbindungselement 4 befindet, gegenüberliegende Seite). Somit wird ein sicherer Sitz des Halteteils 1 am Verbindungselement 2 im verbundenen Zustand durch Erreichen eines kraft- und formschlüssigen Zustandes erzielt.

Die Größe des ersten Abstands 8 der Öffnung des Halteteils 1 kann allerdings variieren, insbesondere kann der erste Abstand 8 auch nur minimal größer sein als die erste Breite 9 des zweiten Verbindungselements 4 (in Fig. 1B dargestellt).

In einer vorteilhaften Ausführungsform verjüngen sich die beiden ersten Verbindungselemente 3 und 3' entlang der ersten Ausstellrichtung A und ermöglichen somit ein sehr einfaches Durchgreifen der beiden ersten Verbindungselemente 3 und 3' in die Öffnungen 7' des Verbindungsteils 2 (in Fig. 1B dargestellt.). Die in der Fig. 1A dargestellte trapezförmige Geometrie der ersten Verbindungselemente 3 und 3' ist nicht zwingend und kann jede beliebige geometrische Form, wie beispielsweise die Form eines Dreiecks oder eines Halbkreises, annehmen.

Die Fig. 1B zeigt das Verbindungsteil 2 mit von einem Rand der Öffnung 7' abstehenden zweiten Verbindungselementen 4 und 4' und dem Verrastungsgegenstück 6. Die beiden zweiten Verbindungselementen 4 und 4' befinden sich räumlich hinter dem Verbindungsteil 2 (die Betrachtung erfolgt in der Richtung der Anbringung des Halteteils).

Die beiden zweiten Verbindungselemente 4 und 4' dienen dabei dem Verbinden des Verbindungsteils 2 der Fahrzeugstruktur mit dem Halteteil 1. Die beiden zweiten Verbindungselemente 4 und 4' werden in die Öffnungen 7 des Halteteils 1 (in Fig. 1A dargestellt) derart entlang der zweiten Ausstellrichtung B der beiden zweiten Verbindungselemente 4 und 4' eingeführt, sodass sie die Öffnungen 7 des Halteteils 1 durchgreifen.

Weiter ist das Verrastungsgegenstück 6 vorgesehen, welches mit dem Verrastungselement 5 der Fig. 1A eine Verrastung des Halteteils 1 mit dem Verbindungsteil 2 der Fahrzeugstruktur ermöglicht.

In einer Ausgestaltung ist das Verrastungsgegenstück 6, unterhalb (die Betrachtung erfolgt entlang der zweiten Ausstellrichtung B) eines der beiden zweiten Verbindungselemente 4, 4' auf dem Verbindungsteil 2 angebracht. Diese Anordnung ist allerdings nicht zwingend und das Verrastungsgegenstück 6 kann an jeder beliebigen Stellen der Verbindungsteils 2 angebracht sein. Auch eine Beschränkung auf nur ein Verrastungsgegenstück 6 oder zwei zweite Verbindungselemente 4, 4' ist nicht zwingend, sondern die Anzahl kann beliebig erweitert werden.

Die Öffnung 7' des Verbindungsteils 2 weist wie bereits erläutert einen ersten Abstand 11 auf (betrachtet wird hierbei die, dem Rand der Öffnung an dem sich das abstehende zweite Verbindungselement 4 befindet, gegenüberliegende Seite), der minimal größer ist als die erste Breite 12 des ersten Verbindungselements 3 (in Fig. 1A dargestellt). Somit wird ein sicherer Sitz des Halteteils 1 am Verbindungselement 2 durch Erreichen eines kraft- und formschlüssigen Zustandes erzielt.

Die Größe des ersten Abstands 11 der Öffnung des Verbindungsteils 2 ist nicht zwingend so wie dargestellt, kann vielmehr variieren, insbesondere kann der erste Abstand 11 auch größer sein als die erste Breite 12 (in Fig. 1A dargestellt) des ersten Verbindungselements 3.

Die in der Fig. 1B dargestellte rechteckige Form der beiden zweiten Verbindungselemente 4, 4' entlang der zweiten Ausstellrichtung B ist nicht zwingend und kann jede beliebige geometrische Form, wie beispielsweise die Form eines Dreiecks oder eines Halbkreises annehmen. Weiterhin ist es möglich, dass sich die beiden zweiten Verbindungselemente 4, 4' in analoger Weise zu den in Fig. 1A beschriebenen ersten Verbindungselementen 3, 3' entlang der zweiten Ausstellrichtung B verjüngen.

Die Fig. 2 zeigt die Halteverrichtung 1 und das Verbindungsteil 2 in einem verbundenen Zustand dargestellt. Das Halteteil 1 wurde mit dem Verbindungsteil 2 mittels eines gleichzeitigen Durchgreifens der in Fig. 1A und Fig. 1B beschriebenen Verbindungselemente 3, 3' bzw. 4 und 4' in die entsprechenden Öffnungen 7 bzw. 7' verbunden. Für entsprechende Erläuterungen wird auf die Fig. 1A bzw. die Fig. 1B verwiesen.

In einer bevorzugten Ausführungsform ist die erste Ausstellrichtung A des freien Endes der beiden ersten Verbindungselemente 3, 3' des Halteteils 1 annähernd entgegengesetzt zu der zweiten Ausstellrichtung B des freien Endes der beiden zweiten Verbindungselemente 4, 4' des Verbindungsteils 2 ausgerichtet.

In dem verbundenen Zustand des Halteteils 1 mit dem Verbindungsteil 2 der Fahrzeugstruktur liegen die beiden ersten Verbindungselemente 3, 3' des Halteteils 1 auf dem Verbindungsteil 2 auf und die beiden zweite Verbindungselemente 4, 4' des Verbindungsteils 2 liegen auf dem Halteteil 1 auf. Somit wird eine eindeutige Positionierung des Halteteils 1 am Verbindungsteil 2 erzielt.

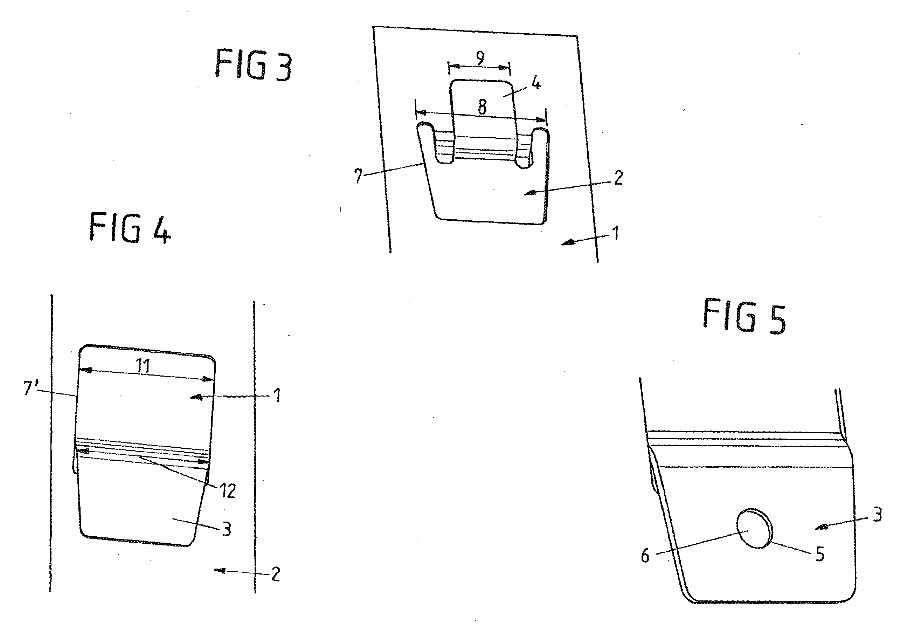

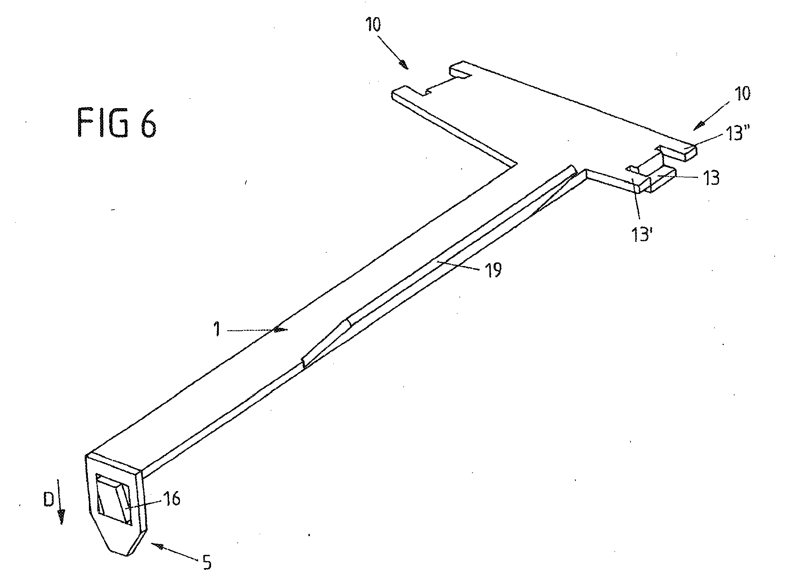

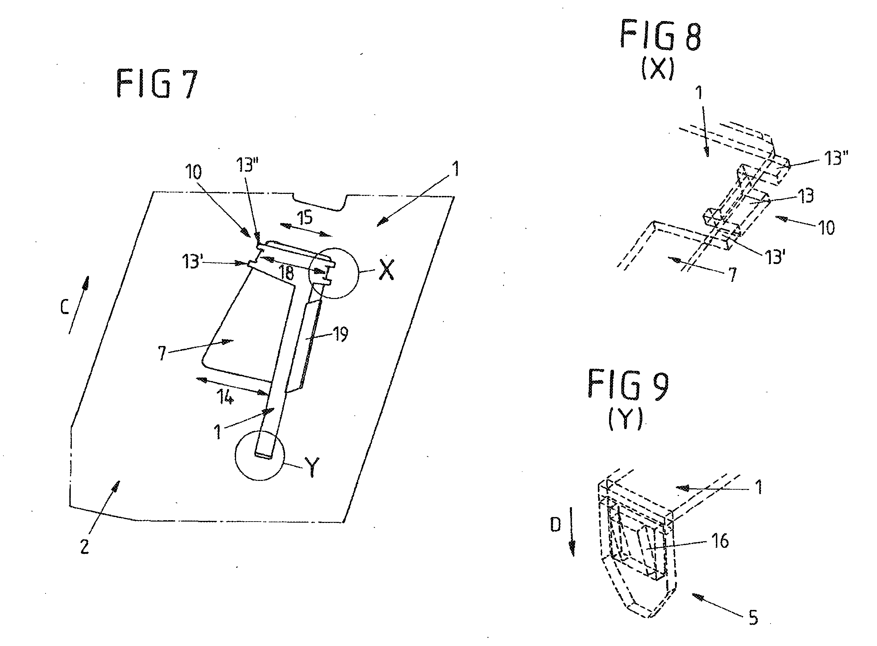

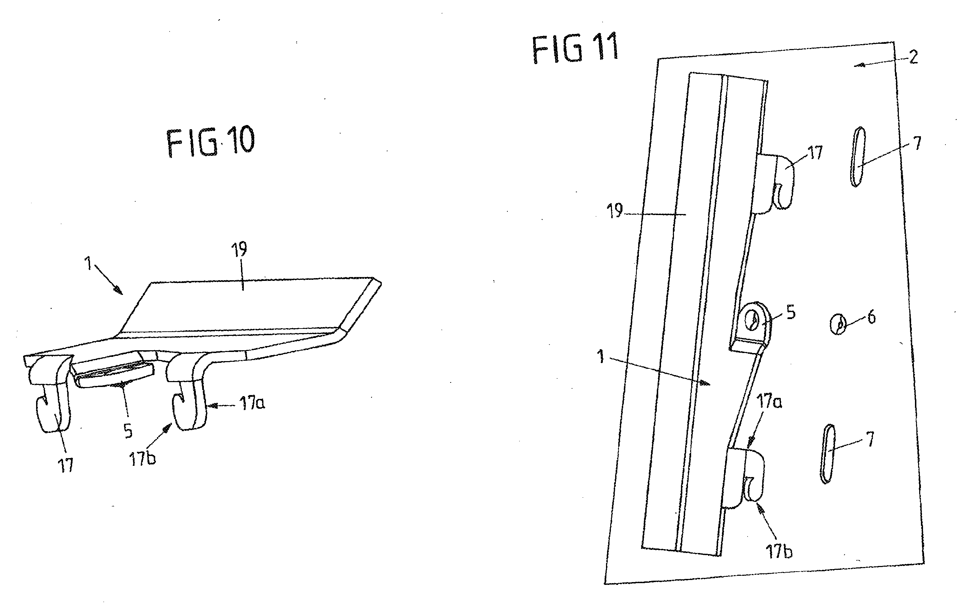

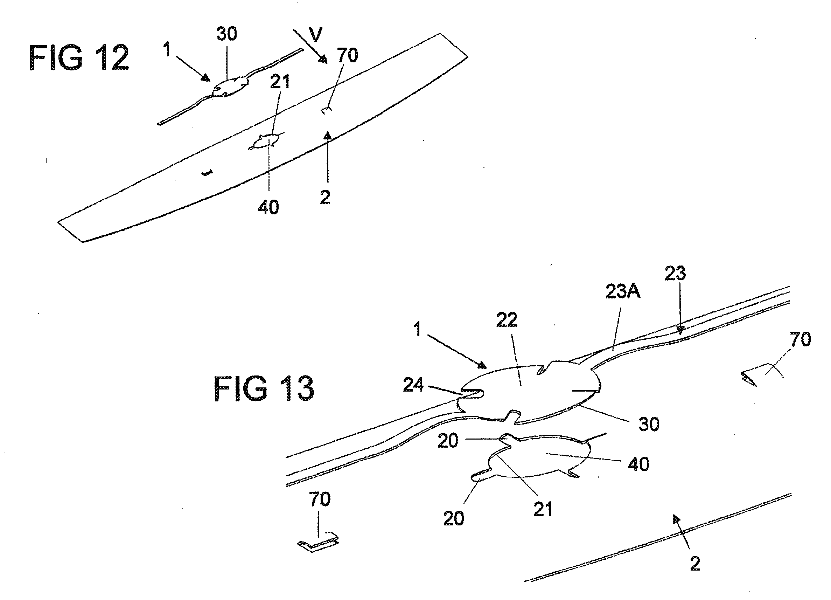

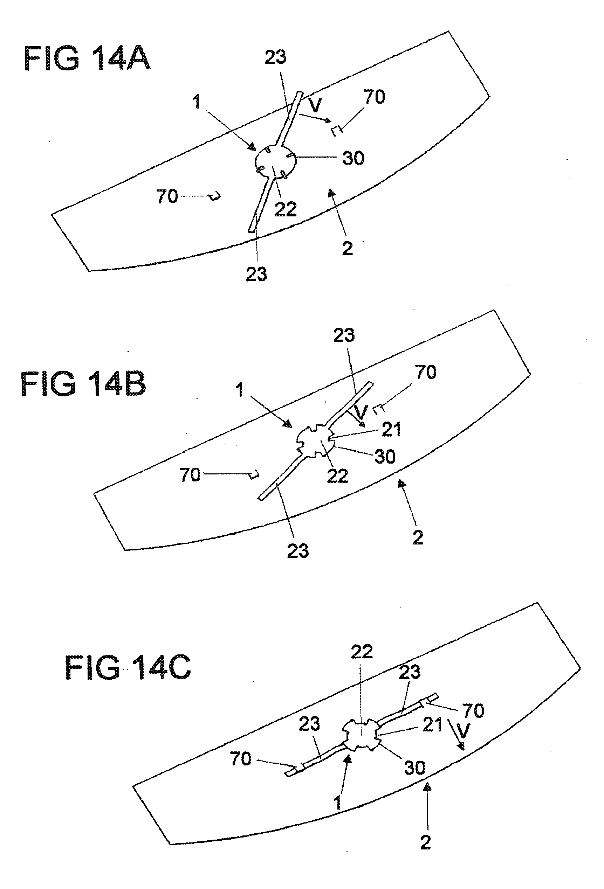

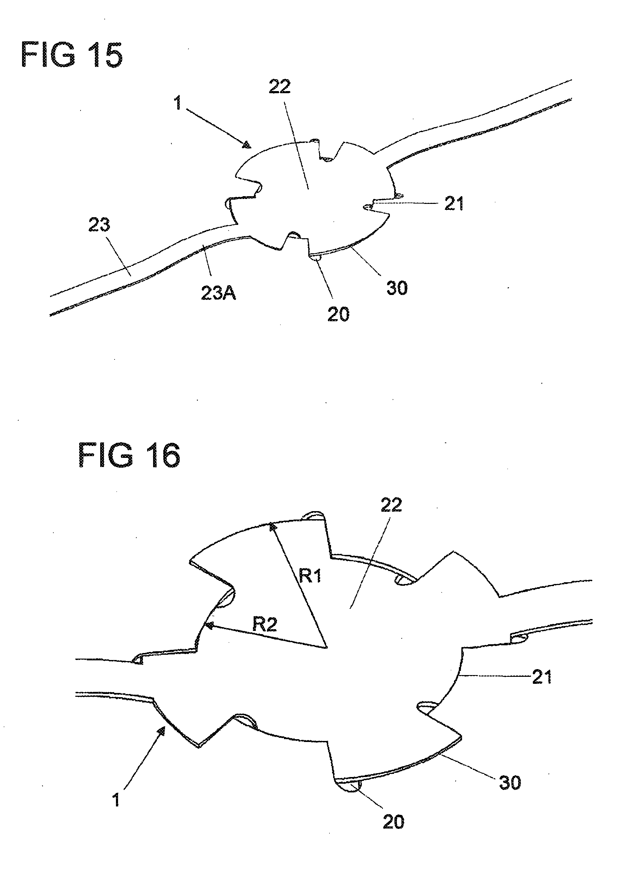

Die Fig. 3 zeigt ein Halteteils 1 und Verbindungsteil 2 im verbundenen Zustand in einer rückwärtigen Ansicht im Bezug auf die Anbringungsrichtung der Haltervorrichtung 1. Die Öffnung des Halteteils 1 weist den ersten Abstand 8 auf (betrachtet wird hierbei die dem Rand der Öffnung, an dem sich das abstehende erste Verbindungselement 3 befindet, anliegende Seite), der größer ist als die erste Breite 9 des zweiten Verbindungselements 4.

Die Fig. 4 zeigt ein Halteteil 1 und Verbindungsteil 2 in einem verbundenen Zustand in einer frontalen Ansicht im Bezug auf die Anbringungsrichtung der Haltervorrichtung 1. Die Öffnung des Verbindungsteils 2 weist einen ersten Abstand 11 auf (betrachtet wird hierbei die dem Rand der Öffnung, an dem sich das abstehende zweite Verbindungselement 4 befindet, gegenüberliegende Seite), der minimal größer ist, als die erste Breite 12 des ersten Verbindungselements 3. Somit wird ein sicherer Sitz des Halteteils 1 am Verbindungselement 2 durch Erreichen eines kraft- und formschlüssigen Zustandes erzielt.

Die Fig. 4 und Fig. 5 zeigen, dass das erste Verbindungselemente 3 des Halteteils 1 auf dem Verbindungsteil 2 aufliegt und das zweite Verbindungselement 4 des Verbindungsteils 2 auf dem Halteteil 1 aufliegt. Für weitere Erläuterungen wird auf die vorhergehenden Figuren verwiesen.

In der Fig. 5 ist das Halteteil 1 und das Verbindungsteil 2 in dem verbundenen Zustand in einer frontalen Ansicht im Bezug auf die Anbringungsrichtung der Haltervorrichtung 1 dargestellt, wobei das Verrastungselement 5 mit dem Verrastungsgegenstück 6 verrastet ist. Das erste Verbindungselement 3 weist ein Verrastungselement 5 in Form einer kreisrunden Öffnung auf und ist mit dem Verrastungsgegenstück in Form einer halbkugelförmigen Erhebung 6 auf dem Verbindungsteil 2 verrastet. Die Lage des Verrastungselemente 5 bzw. des Verrastungsgegenstück 6 kann jede beliebige Position einnehmen und es können auch andere Verrastungsarten verwendet werden.

In den Figuren 1 bis 5 sind die ersten und zweiten Verbindungselemente 3, 3', 4, 4' jeweils als im Wesentlichen flächig ausgebildete Haken ausgebildet. Diese Ausgestaltung ist jedoch nur beispielhaft zu verstehen. Beispielsweise können die Haken auch in sich gewellt sein.

Wie beschrieben kann das Halteteil 1 als einteiliges Element, beispielsweise als einteiliges Blechelement, ausgebildet sein. Grundsätzlich kann das Halteteil jedoch auch aus mehreren miteinander verbundenen Komponenten bestehen.

Die Erfindung beschränkt sich nicht auf die vorstehend beschrieben Ausgestaltung einer Vorrichtung, die ohne die Notwendigkeit einer Verschraubung oder unter Zuhilfenahme zusätzlicher Befestigungselemente in einfacher Weise die Befestigung eines Gassackmoduls, beziehungsweise eines Halteteils desselben an einer Fahrzeugstruktur ermöglicht. Vielmehr sind eine Vielzahl von Variationen möglich, beispielsweise können die dargestellten Befestigungs- und Verrastungselemente in anderer Weise ausgebildet sein.

## Patentansprüche

1. Vorrichtung zur Befestigung eines Halteteils (1) eines Gassackmoduls eines Fahrzeuginsassen-Rückhaltesystems mit einem Verbindungsteil (2) einer Fahrzeugstruktur, wobei
- das Halteteil (1) mindestens ein erstes Verbindungselement (3), das von einem Rand einer Öffnung (7) in dem Halteteil (1) absteht, aufweist, wobei das erste Verbindungselement (3) zum Verbinden des Halteteils (1) mit dem Verbindungsteil (2) der Fahrzeugstruktur dient,
- das Verbindungsteil (2) mindestens ein zweites Verbindungselement (4), das von einem Rand einer Öffnung (7') in dem Verbindungsteil (2) absteht, aufweist, wobei das zweite Verbindungselement (4) zum Verbinden des Verbindungsteils (2) mit dem Halteteil (1) dient,
**dadurch gekennzeichnet, dass**
im verbundenen Zustand des Halteteils (1) mit dem Verbindungsteil (2) das erste Verbindungselement (3) des Halteteils (1) die Öffnung (7) des Verbindungsteils (2) durchgreift und das zweite Verbindungselement (4) des Verbindungsteils (2) die Öffnung (7) des Halteteils (1) durchgreift.

2. Vorrichtung nach Anspruch 1, **dadurch gekennzeichnet, dass** das erste Verbindungselement (3) von einem Rand der Öffnung (7) des Halteteils (1) in Richtung der Anbringung des Halteteils (1) absteht und sich dabei räumlich vor dem Halteteil (1) erstreckt, und das zweite Verbindungselement (4) von einem Rand der Öffnung (7') des Verbindungsteils (2) entgegen der Richtung der Anbringung des Halteteils (1) absteht und sich dabei räumlich hinter dem Verbindungsteil (2) erstreckt.

3. Vorrichtung nach Anspruch 1 oder 2, **dadurch gekennzeichnet, dass** das freie Ende des erste Verbindungselement (3) eine erste Ausstellrichtung (A), die einer zweiten Ausstellrichtung (B) des freie Endes des zweite Verbindungselement (4) entgegengesetzt ausgerichtet ist, aufweist.

4. Vorrichtung nach einem der vorhergehenden Ansprüche, **dadurch gekennzeichnet, dass** in einem verbundenen Zustand des Halteteils (1) mit dem Verbindungsteil (2) das erste Verbindungselement (3) des Halteteils (1) auf dem Verbindungsteil (2) aufliegt und das zweite Verbindungselement (4) des Verbindungsteils (2) auf dem Halteteil (1) aufliegt.

5. Vorrichtung nach einem der vorhergehenden Ansprüche, **dadurch gekennzeichnet, dass** das Halteteil (1) ein Verrastungselement (5) und das Verbindungsteil (2) ein Verrastungsgegenstück (6) aufweist.

6. Vorrichtung nach einem der vorhergehenden Ansprüche, **dadurch gekennzeichnet, dass**
a) die Öffnung (7') des Verbindungsteils (2) einen ersten Abstand (11) an dem Rand der Öffnung (7') aufweist, der dem zweiten Verbindungselement (4) gegenüberliegt, wobei dieser Abstand (11) größer ist als eine erste Breite (12) des ersten Verbindungselements (3) und/oder
b) die Öffnung (7) des Halteteils (1) einen ersten Abstand (8) an dem Rand der Öffnung (7) aufweist, der dem ersten Verbindungselement (3) anliegt, wobei dieser Abstand (8) größer ist als eine erste Breite (9) des zweiten Verbindungselements (4) und/oder
c) das erste Verbindungselement (3) entlang der ersten Ausstellrichtung (A) sich verjüngt und/oder
d) das zweite Verbindungselement (4) entlang der zweiten Ausstellrichtung (B) sich verjüngt.

## Claims

1. Device for fastening a holding part (1) of an airbag module of a vehicle occupant restraint system to a connecting part (2) of a vehicle structure, wherein
- the holding part (1) has at least one first connecting element (3) which protrudes from an edge of an opening (7) in the holding part (1), wherein the first connecting element (3) serves for connecting the holding part (1) to the connecting part (2) of the vehicle structure,
- the connecting part (2) has at least one second connecting element (4) which protrudes from an edge of an opening (7') in the connecting part (2), wherein the second connecting element (4) serves for connecting the connecting part (2) to the holding part (1),
**characterized in that**,
in the connected state of the holding part (1) to the connecting part (2), the first connecting element (3) of the holding part (1) reaches through the opening (7) of the connecting part (2), and the second connecting element (4) of the connecting part (2) reaches through the opening (7) of the holding part (1).

2. Device according to Claim 1, **characterized in that** the first connecting element (3) protrudes from an edge of the opening (7) in the holding part (1) in the direction of the mounting of the holding part (1) and extends three-dimensionally in front of the holding part (1), and the second connecting element (4) protrudes from an edge of the opening (7') in the connecting part (2) counter to the direction of the mounting of the holding part (1) and extends three-dimensionally behind the connecting part (2).

3. Device according to Claim 1 or 2, **characterized in that** the free end of the first connecting element (3) has a first deployment direction (A) which is oriented in an opposed manner to a second deployment direction (B) of the free end of the second connecting element (4).

4. Device according to one of the preceding claims, **characterized in that** in a connected state of the holding part (1) to the connecting part (2), the first connecting element (3) of the holding part (1) rests on the connecting part (2) and the second connecting element (4) of the connecting part (2) rests on the holding part (1).

5. Device according to one of the preceding claims, **characterized in that** the holding part (1) has a latching element (5) and the connecting part (2) has a latching counterpart (6).

6. Device according to one of the preceding claims, **characterized in that**
a) the opening (7') in the connecting part (2) has a first spacing (11) at that edge of the opening (7') which is opposite the second connecting element (4), wherein said spacing (11) is larger than a first width (12) of the first connecting element (3), and/or
b) the opening (7) in the holding part (1) has a first spacing (8) at that edge of the opening (7) which bears against the first connecting element (3), wherein said spacing (8) is larger than a first width (9) of the second connecting element (4), and/or
c) the first connecting element (3) tapers along the first deployment direction (A), and/or
d) the second connecting element (4) tapers along the second deployment direction (B).

## Revendications

1. Dispositif de fixation d'une pièce de maintien (1) d'un module de sac de gaz d'un système de retenue d'occupant d'un véhicule comprenant une pièce de connexion (2) d'une structure de véhicule,
- la pièce de maintien (1) comprenant au moins un premier élément de connexion (3) qui fait saillie à partir d'un bord d'une ouverture (7) dans la pièce de maintien (1), le premier élément de connexion (3) servant à la connexion de la pièce de maintien (1) à la pièce de connexion (2) de la structure de véhicule,
- la pièce de connexion (2) comprenant au moins un deuxième élément de connexion (4) qui fait saillie à partir d'un bord d'une ouverture (7') dans la pièce de connexion (2), le deuxième élément de connexion (4) servant à la connexion de la pièce de connexion (2) à la pièce de maintien (1), **caractérisé en ce**
**qu'**à l'état où la pièce de maintien (1) est connectée à la pièce de connexion (2), le premier élément de connexion (3) de la pièce de maintien (1) vient en prise à travers l'ouverture (7) de la pièce de connexion (2) et le deuxième élément de connexion (4) de la pièce de connexion (2) vient en prise à travers l'ouverture (7) de la pièce de maintien (1).

2. Dispositif selon la revendication 1, **caractérisé en ce que** le premier élément de connexion (3) fait saillie à partir d'un bord de l'ouverture (7) de la pièce de maintien (1) dans le sens de montage de la pièce de maintien (1) et s'étend en l'occurrence dans l'espace devant la pièce de maintien (1), et le deuxième élément de connexion (4) fait saillie à partir d'un bord de l'ouverture (7') de la pièce de connexion (2) en sens inverse au sens de montage de la pièce de maintien (1) et s'étend en l'occurrence dans l'espace derrière la pièce de connexion (2).

3. Dispositif selon la revendication 1 ou 2, **caractérisé en ce que** l'extrémité libre du premier élément de connexion (3) présente un premier sens de déploiement (A) qui est orienté en sens inverse à un deuxième sens de déploiement (B) de l'extrémité libre du deuxième élément de connexion (4).

4. Dispositif selon l'une quelconque des revendications précédentes, **caractérisé en ce qu'**à l'état où la pièce de maintien (1) est connectée à la pièce de connexion (2), le premier élément de connexion (3) de la pièce de maintien (1) repose sur la pièce de connexion (2) et le deuxième élément de connexion (4) de la pièce de connexion (2) repose sur la pièce de maintien (1).

5. Dispositif selon l'une quelconque des revendications précédentes, **caractérisé en ce que** la pièce de maintien (1) comprend un élément d'encliquetage (5) et la pièce de connexion (2) comprend une pièce conjuguée d'encliquetage (6).

6. Dispositif selon l'une quelconque des revendications précédentes, **caractérisé en ce que**
a) l'ouverture (7') de la pièce de connexion (2) présente une première distance (11) au niveau du bord de l'ouverture (7') qui est opposé au deuxième élément de connexion (4), cette distance (11) étant supérieure à une première largeur (12) du premier élément de connexion (3) et/ou
b) l'ouverture (7) de la pièce de maintien (1) présente une première distance (8) au niveau du bord de l'ouverture (7) auquel est adjacent le premier élément de connexion (3), cette distance (8) étant supérieure à une première largeur (9) du deuxième élément de connexion (4) et/ou
c) le premier élément de connexion (3) se rétrécit le long du premier sens de déploiement (A) et/ou
d) le deuxième élément de connexion (4) se rétrécit le long du deuxième sens de déploiement (B).
